# EUROPEAN PATENT SPECIFICATION

(11) **EP 3 198 843 B1**
(45) Date of publication and mention of the grant of the patent: **06.02.2019**
(21) Application number: 15849888.1
(22) Date of filing: 14.10.2015
(51) Int. Cl.: H04L 29/08, G06F 9/44, H04L 29/06, G06F 9/451

(54) **METHOD AND SYSTEM FOR SERVING VIRTUAL DESKTOP TO CLIENT**
VERFAHREN UND SYSTEM ZUR BEREITSTELLUNG EINES VIRTUELLEN DESKTOPS FÜR EINEN CLIENT
PROCÉDÉ ET SYSTÈME POUR FOURNIR UN BUREAU VIRTUEL À UN CLIENT

(30) Priority: 16.10.2014 US 201414516240
(43) Date of publication of application: 02.08.2017
(73) Proprietor: Huawei Technologies Co., Ltd., Longgang District Shenzhen, Guangdong 518129 (CN)
(72) Inventor: CHEN, Pu, Shenzhen Guangdong 518129 (CN); XIA, Guangsong, Fremont California 94539 (US)
(74) Representative: Epping - Hermann - Fischer
(86) International application number: PCT/CN2015/091939
(87) International publication number: WO 2016/058534

(56) References cited:
- CN-A- 102 377 777
- CN-A- 103 516 762
- CN-A- 103 944 926
- US-A1- 2011 224 811
- US-A1- 2014 029 676
- US-A1- 2014 032 775
- Sasa Petrovic: "Global XenApp Farm and XenDesktop Site Design from a user's perspective | Citrix Blogs", , 7 July 2013 (2013-07-07), XP055400968, Retrieved from the Internet: URL:https://www.citrix.com/blogs/2013/07/0 7/global-xenapp-farm-and-xendesktop-site-d esign-from-a-users-perspective/ [retrieved on 2017-08-24]

## Description

### TECHNICAL FIELD

The present invention relates generally to a method and system for combining desktop virtualization and application virtualization, and, in particular embodiments, to a method and system for serving a virtual desktop to a client.

### BACKGROUND

Modern computing exhibits trends toward remote services and remote processing for both personal and business applications. Remote services, such as centralized, server installed software suites, offer many advantages over traditional local installations. One significant advantage is the availability of greater computing resources at a remote location over local. Another advantage is the centralization of maintenance and security activities.

For many, the most familiar instance of remote processing is the virtual desktop. The virtual desktop is based on a virtual desktop infrastructure (VDI) that allows a client computing device, such as a personal computer (PC), tablet computer, smart phone, or game platform, among others, to utilize an operating system (OS) desktop or a virtual machine (VM) through a network connection to a server. A VM is a software-implemented imitation of a computing system that can execute single applications within an OS. A familiar virtual desktop is the Windows® Remote Desktop, also referred to as the Microsoft® Remote Desktop Services (RDS), which provides general access to a Windows® desktop and certain applications executable within the OS. Another example is the Amazon® Work Spaces. In the VDI, the server executes the OS for the client, generating display data and rendering instructions for a graphics processing subsystem within the server. The graphics processing subsystem can include a dedicated graphics processing unit (GPU), graphics memory, data buses, and display interfaces. It can reside on a dedicated graphics circuit card assembly, or can be integrated on a motherboard with a central processing unit (CPU). The graphics processing subsystem renders frames according to the display data and rendering instructions and the frames are encoded and transmitted to the client for display. Generally, the client simply decodes and displays the frames. Additionally, the client is responsible for a user interface. Remote services, sometimes referred to as application virtualization, are similar to the virtual desktop in that processing is carried out remotely, on a server for instance, and results are communicated to the client. Remote services generally focus on discrete software programs or software suites, such as a computer aided drafting (CAD) application or a game. The advantage of application virtualization is that computationally intensive tasks can be offloaded to a better suited computing system.

US 2011/224811 A1 discloses a method in which users access their hosted desktops across one independent computing architecture (ICA) link, while those desktops access hosted shared applications across a second ICA link.

From the contribution "Global XenApp Farm and XenDesktop Site Design from a user's perspective | Citrix Blogs", Sasa Petrovic, 7 July 2013 (2013-07-07), XP055400968) a general solution of deploying XenApp and XenDesktop is known.

### SUMMARY OF THE INVENTION

A method of serving a virtual desktop to a client, a virtual desktop server and a system for serving a virtual desktop to a client according to the independent claims are provided. Dependent claims provide preferred embodiments. Embodiments of the present invention provide methods and systems for serving a virtual desktop to a client using virtual desktop infrastructure (VDI) and application virtualization as defined by the appended independent claims and the further embodiments of the dependent claims.

In one embodiment, the method includes rendering and encoding an application frame on a first server, rendering and encoding a desktop frame that confines the application frame on a second server, communicating the application frame to the second server, and communicating the desktop frame and redirecting the application frame from the second server to the client.

An embodiment virtual desktop server includes a virtual machine monitor (VMM) configured to create and run at least one virtual machine (VM) for at least one respective client. The embodiment virtual desktop server also includes a VM associated with a client according to the VMM. The VM includes an application frame redirect module configured to receive and redirect an encoded application frame from an application server to the client. The VM also includes an operating system (OS) configured to generate a desktop frame for encoding and communicating to the client.

An embodiment system for serving a virtual desktop to a client includes a virtual desktop server and a virtual application server. The virtual desktop server is configured to operate a VM associated with the client. The virtual application server is configured to execute an application for the client, render an application frame for display on the client, and encode and communicate the application frame to the VM. The VM is configured to cause the virtual desktop server to render a desktop frame that confines the application frame, encode and communicate the desktop frame to the client, and direct the application frame to the client for compositing with the desktop frame.

### BRIEF DESCRIPTION OF THE DRAWINGS

For a more complete understanding of the present invention, and the advantages thereof, reference is now made to the following descriptions taken in conjunction with the accompanying drawings, in which:
Figure 1 is a block diagram of one embodiment of a system for serving a virtual desktop to a client;
Figure 2 is a block diagram of one embodiment of a virtual desktop server;
Figure 3 is a block diagram of another embodiment of a system for serving a virtual desktop to a client;
Figure 4 is a block diagram of a computing system;
Figure 5 is a flow diagram of one embodiment of a method of serving a virtual desktop to a client; and
Figure 6 is an illustration of an application frame, a desktop frame, and a composite frame.

### DETAILED DESCRIPTION OF ILLUSTRATIVE EMBODIMENTS

Certain systems utilize both the VDI and application virtualization. Those systems typically include at least one remote server machine serving on or more thin clients, or simply clients. A server is generally a process running on a machine, the implication being that multiple server processes can execute on a single machine. In embodiment systems combining VDI and application virtualization, there is a virtual desktop server and a virtual application server, which can be separate processes executing on separate machines, or separate processes executing on a single machine.

Combining VDI and application virtualization is beneficial in systems that utilize the VDI and also utilize graphics intensive applications. Some virtual desktop server machines lack the graphics processing resources to effectively serve graphics intensive applications to clients, or the system users or administers simply prefer to offload certain graphics processing tasks. A common solution is for the virtual desktop to be served, or hosted, by the virtual desktop server through a VM. The VM is typically dedicated to a particular client and operates an OS. The virtual desktop server then offloads certain processing tasks by utilizing a virtual application server for processing intensive applications. The virtual desktop server then relays the application data from the virtual application server to the client over network connections.

It is realized herein that certain overhead costs are incurred when the virtual desktop server relays application data from the virtual application server to the client. The virtual application server executes a virtual application, thereby generating virtual application data and rendering instructions. The virtual application data and rendering instructions are employed by a graphics processing system local to the virtual application server to render virtual application frames. Virtual application frames include graphics for the virtual application. The rendered application frames are typically encoded and communicated to the virtual desktop server. The virtual desktop server is responsible for the remainder of the virtual desktop. The virtual application graphics are generally contained within a window that is itself contained within the virtual desktop, or confined to the virtual desktop. The virtual application window can be all or a portion of the virtual desktop. Many solutions include the virtual desktop server decoding the rendered application frames and compositing the virtual application frames with the virtual desktop frames. A composite frame that includes the virtual desktop and the virtual application is then encoded and transmitted to the client. The client then decodes and displays the composite frame. It is realized herein the decoding, compositing, and re-encoding carried out by the VM on the virtual desktop server is unnecessary. Rather, it is realized herein, the VM can include a redirect module for redirecting received encoded application frames to the client. The VM executes the OS and generates, encodes, and transmits the virtual desktop frame. The application frame represents a window within the virtual desktop. The virtual desktop frame confines the application frame, but lacks the application frame content, which is the virtual application graphics. It is further realized herein the client can receive the encoded desktop frame and encoded application frame, decode both frames, composite and display a composite frame that includes both the virtual desktop and the virtual application.

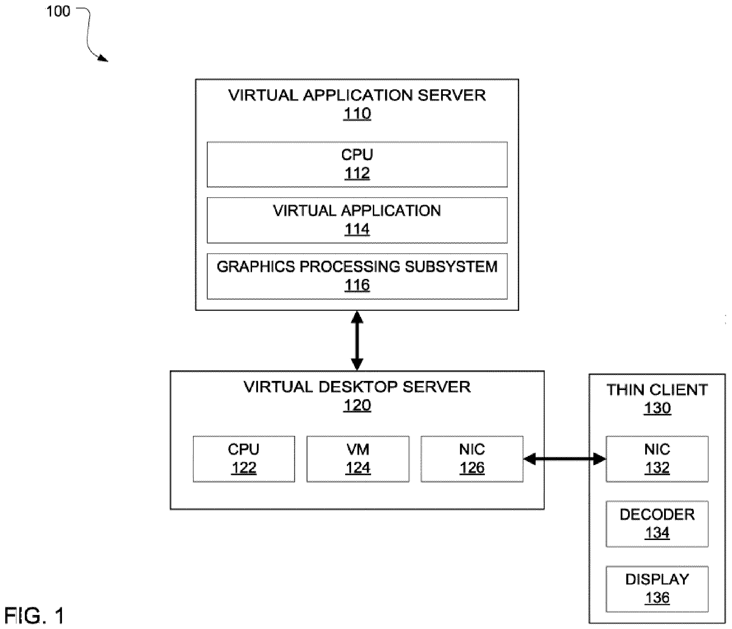

Figure 1 is a block diagram of one embodiment of a system 100 for serving a virtual desktop to a client. System 100 includes a virtual application server 110, a virtual desktop server 120, and a thin client 130. Virtual desktop server 120 serves a virtual desktop to thin client 130. Virtual desktop server 120 uses virtual application server 110 to execute and render a virtual application 114 to thin client 130. Virtual application server 110 and virtual desktop server 120 are separate server machines. Virtual application server 110 and virtual desktop server 120 can, in alternative embodiments, be implemented as separate processes on a single machine. When virtual application server 110 and virtual desktop server 120 are implemented on a single server machine the interface between them is typically a software defined interface or possibly an internal communication bus. When virtual application server 110 and virtual desktop server 120 are implemented on separate server machines, the two are typically coupled by a network connection.

Virtual application server 110 includes a CPU 112 configured to execute virtual application 114. Virtual application server 110 also includes a graphics processing subsystem 116, which can include a GPU, dedicated memory, data buses, and video interfaces. CPU 112 executes virtual application 114 to generate virtual application data and rendering instructions. Graphics processing subsystem 116 carries out the rendering instructions on the virtual application data to generate a sequence of application frames. Each of the application frames is encoded and communicated to virtual desktop server 120.

Virtual desktop server 120 includes a CPU 122 configured to operate a VM 124. Virtual desktop server 120 also includes a network interface card (NIC) 126. VM 124 generates virtual desktop data and rendering instructions that are carried out by CPU 122 to render a sequence of desktop frames. CPU 122, in some embodiments, is incapable of processing rendering commands for complex graphics, such as three-dimensional graphics often found in CAD applications and games. Virtual application server 110 provides the high-performance graphics processing demanded by certain applications. In certain embodiments, virtual desktop server 120 can include a graphics processing subsystem. A graphics processing subsystem can include a GPU, dedicated memory, data buses, and video interfaces. In these embodiments the graphics processing subsystem carries out the rendering instructions on the virtual desktop data to render a sequence of desktop frames. Continuing the embodiment of Figure 1, each desktop frame confines a corresponding application frame. The desktop frame does not include the application frame content because the application is virtualized and the processing is offloaded to virtual application server 110. Virtual desktop server 120 encodes each desktop frame and communicates them to thin client 130 through NIC 126. Additionally, VM 124 is configured to receive and redirect encoded application frames from virtual application server 110 to thin client 130 through NIC 126.

Thin client 130 includes a NIC 132 that couples it to virtual desktop server 120. Thin client 130 also includes a decoder 134 and a display 136. Thin client 130 receives an encoded application frame and an encoded desktop frame from virtual desktop server 120 through NIC 132. The application frame and desktop frame are decoded by decoder 134. Thin client 130 then composites the two, forming a composite frame that includes both the virtual desktop and the virtual application. The composite frame is then displayed on display 136.

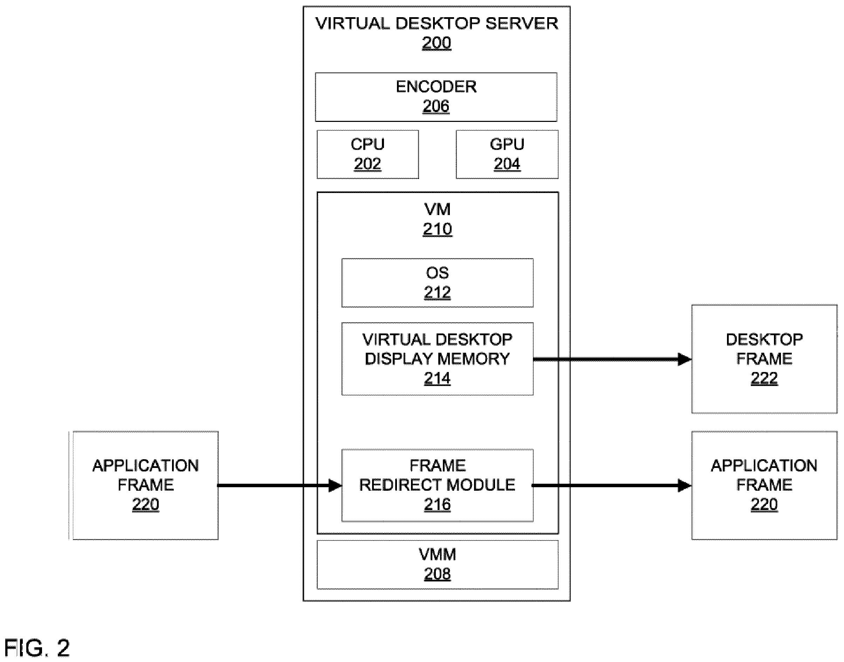

Figure 2 is a block diagram of one embodiment of a virtual desktop server 200. Virtual desktop server 200 includes a CPU 202, a GPU 204, an encoder 206, a virtual machine monitor (VMM) 208, and a VM 210. VM 210 includes an OS 212, a virtual desktop display memory 214, and a frame redirect module 216. Virtual desktop server 200 is configured to receive an application frame 220 and forward it on to a client. Virtual desktop server 200 is also configured to generate a desktop frame 222 and transmit it to the client.

CPU 202 is configured to operate VMM 208. VMM 208 is operable to create VM 210 and assign it to the client. VMM 208 can create and maintain multiple VMs for multiple respective clients. VM 210 executes OS 212, thereby generating virtual desktop data and rendering instructions. In certain embodiments, GPU 204 is not available, is not suited for high-performance graphics processing, or is omitted from virtual desktop server 200 altogether. In those embodiments, CPU 202 is configured to carry out the rendering instructions on the virtual desktop data to generate a sequence of desktop frames. In the embodiment of Figure 2, GPU 204 is configured to carry out the rendering instructions on the virtual desktop data to generate a sequence of desktop frames. As a frame is rendered by GPU 204, it is written to virtual desktop display memory 214. Encoder 206 is configured to access virtual desktop display memory 214 and encode the stored desktop frame. Desktop frame 222, now encoded, is then transmitted to the client.

Virtual desktop server 200 receives application frame 220 from a virtual application server. Application frame 220 is passed to frame redirect module 216 in VM 210. Frame redirect module 216 is configured to forward the frame to the client. Application frame 220 is not decoded and is not stored in virtual desktop display memory 214 along with the desktop frame.

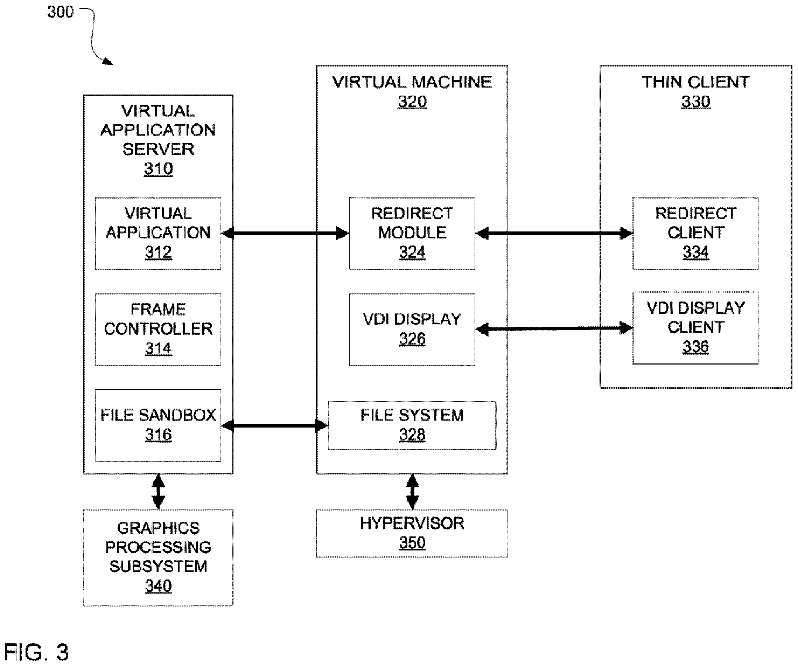

Figure 3 is a block diagram of one embodiment of a system 300 for serving a virtual desktop to a client. System 300 includes a virtual application server 310, a virtual machine 320, a thin client 330, a graphics processing subsystem 340, and a hypervisor 350.

Virtual application server 310 includes a virtual application 312, a frame controller 314, and a file sandbox 316. Virtual application server is configured to employ graphics processing subsystem 340 to execute virtual application 312, thereby generating an application frame that is communicated to virtual machine 320. Frame controller 314 is operable to monitor the processing load on graphics processing subsystem 340 and adjust the rate at which frames are captured after rendering on graphics processing subsystem 340. The frame rate impacts the computational resources of graphics processing subsystem 340 consumed by virtual application 312. File sandbox 316 is a portion of memory allocated for storing data for virtual application 312 local to virtual application server 310, data that would otherwise be stored on VM 320. File sandbox 316 allows more efficient access to data necessary for virtual application 312.

Hypervisor 350 is configured to create and maintain VM 320, possibly along with one or more other VMs. VM 320 includes a redirect module 324, a VDI display 326, and a file system 328. File system 328 is configured to store client associated data associated with a virtual desktop and any applications running within VM 320, such as virtual application 312. VDI display 326 is the desktop display to be transmitted to and display on thin client 330. VDI display includes the virtual desktop content, but not the application frame content. Frames of VDI display 326 are communicated to thin client 330. Redirect module 324 is configured to receive encoded application frames from virtual application server 310 and forwards them on to thin client 330. Redirect module 324 does not decode the application frames or composite them with VDI display 326.

Thin client 330 includes a redirect client 334 and a VDI display client 336. Redirect client 334 is configured to receive the encoded redirect application frames from redirect module 324 on VM 320. VDI display client 336 is configured to receive encoded desktop frames from VDI display 326 on VM 320. Thin client 330 is configured to decode and composite the application frame and the desktop frame into a composite frame. The composite frame is then displayed.

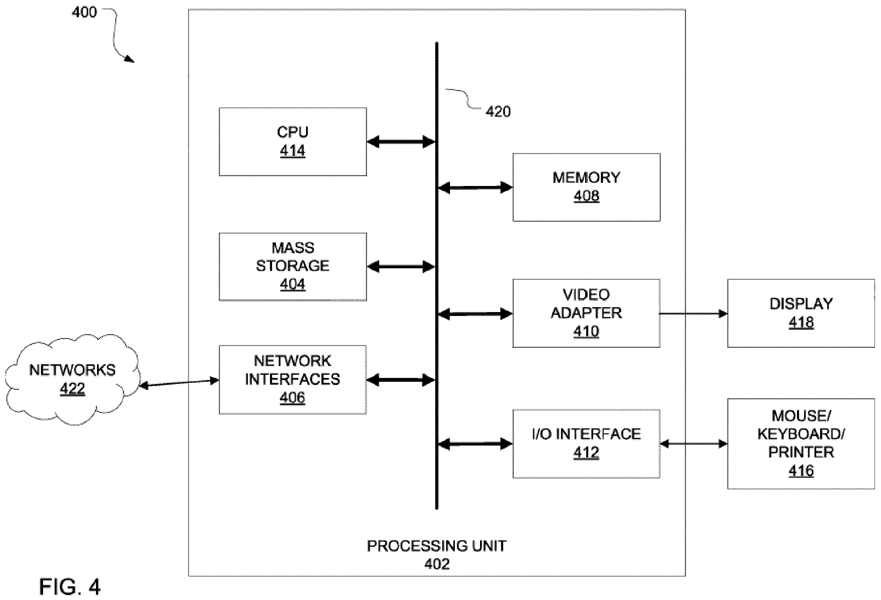

Figure 4 is a block diagram of a processing system 400 that may be used for implementing the devices and methods disclosed herein. Specific devices may utilize all of the components shown, or only a subset of the components, and levels of integration may vary from device to device. Furthermore, a device may contain multiple instances of a component, such as multiple processing units, processors, memories, transmitters, receivers, etc. The processing system 400 may comprise a processing unit 402 equipped with one or more input/output devices, such as a speaker, microphone, mouse, touchscreen, keypad, keyboard, printer, display, and the like. The processing unit may include a central processing unit (CPU) 414, memory 408, a mass storage device 404, a video adapter 410, and an I/O interface 412 connected to a bus 420.

The bus 420 may be one or more of any type of several bus architectures including a memory bus or memory controller, a peripheral bus, video bus, or the like. The CPU 414 may comprise any type of electronic data processor. The memory 408 may comprise any type of system memory such as static random access memory (SRAM), dynamic random access memory (DRAM), synchronous DRAM (SDRAM), read-only memory (ROM), a combination thereof, or the like. In an embodiment, the memory 408 may include ROM for use at boot-up, and DRAM for program and data storage for use while executing programs.

The mass storage 404 may comprise any type of storage device configured to store data, programs, and other information and to make the data, programs, and other information accessible via the bus 420. The mass storage 404 may comprise, for example, one or more of a solid state drive, hard disk drive, a magnetic disk drive, an optical disk drive, or the like.

The video adapter 410 and the I/O interface 412 provide interfaces to couple external input and output devices to the processing unit 402. As illustrated, examples of input and output devices include a display 418 coupled to the video adapter 410 and a mouse/keyboard/printer 416 coupled to the I/O interface 412. Other devices may be coupled to the processing unit 402, and additional or fewer interface cards may be utilized. For example, a serial interface such as Universal Serial Bus (USB) (not shown) may be used to provide an interface for a printer.

The processing unit 402 also includes one or more network interfaces 406, which may comprise wired links, such as an Ethernet cable or the like, and/or wireless links to access nodes or different networks. The network interfaces 406 allow the processing unit 402 to communicate with remote units via the networks. For example, the network interfaces 406 may provide wireless communication via one or more transmitters/transmit antennas and one or more receivers/receive antennas. In an embodiment, the processing unit 402 is coupled to a local-area network 422 or a wide-area network for data processing and communications with remote devices, such as other processing units, the Internet, remote storage facilities, or the like.

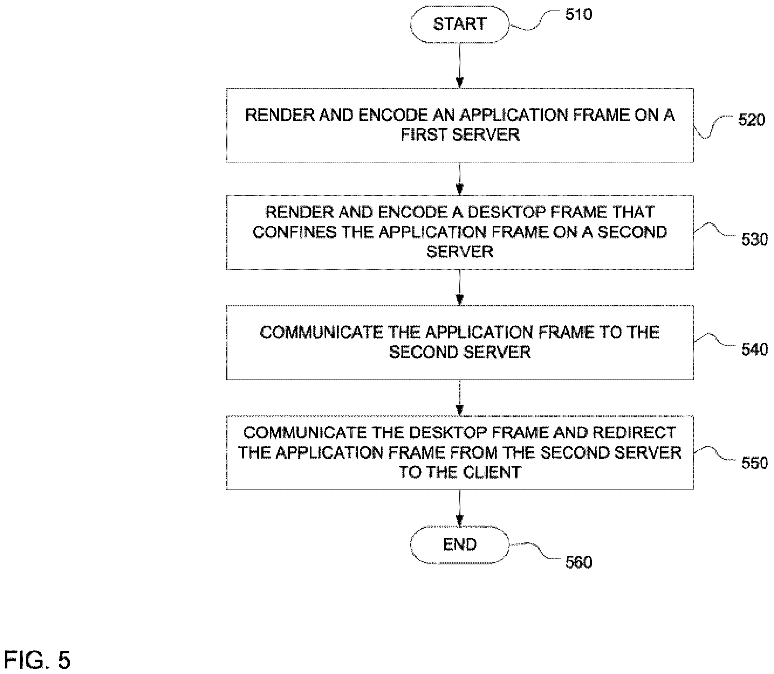

Figure 5 is a flow diagram of one embodiment of a method of serving a virtual desktop to a client. The method begins at a start step 510. At an application rendering step 520, a first server renders and encodes an application frame. The application frame is a product of executing a virtual application and rendering the resulting graphics. At a desktop rendering step 530, a second server renders and encodes a desktop frame. The desktop frame is a product of executing an OS and rendering a virtual desktop. The desktop frame confines the application frame, but lacks the content of the application frame. In certain embodiments, the OS executes within a VM created and maintained for the given client. In certain embodiments, the VM operates within a virtual desktop server, possibly along with one or more other VMs assigned to one or more respective clients.

Continuing the embodiment of Figure 5, the first server communicates the application frame to the second server at a first communication step 540. The second server does not decode the application frame or composite it with the desktop frame rendered in desktop rendering step 530. At a second communication step 550, the desktop frame is transmitted to the client. Additionally, the application frame is redirected to the client. The client should be operable to receive the encoded desktop frame and the encoded application frame and decode both. The decoded frames are then composited into a composite frame that includes the virtual desktop and the virtual application. The composite frame can then be displayed. The method ends at an end step 560.

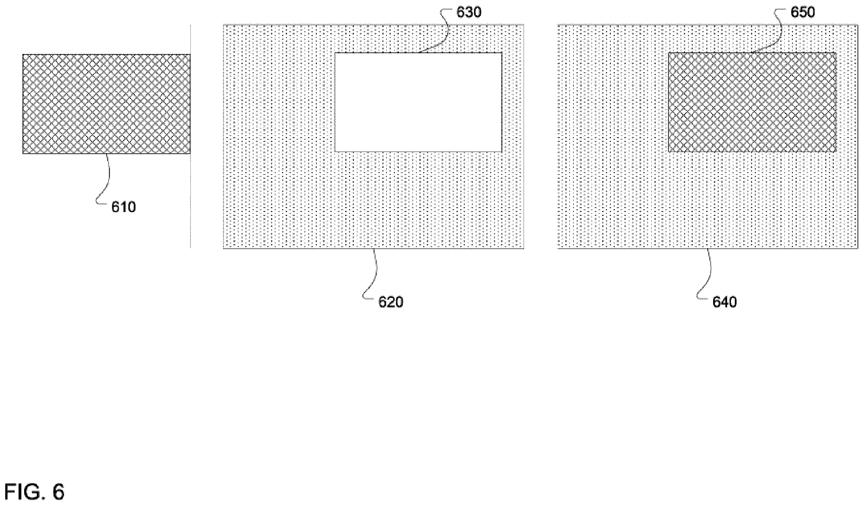

Figure 6 is an illustration of an application frame 610, a desktop frame 620, and a composite frame 640. Application frame 610 includes the graphics generated as a product of executing a virtual application and rendering an application window. The virtual application may contain graphics that require high-performance graphics processing hardware not otherwise available on a virtual desktop server. Desktop frame 620 includes primarily desktop graphics, such as pointers, icons, menu bars, etc. Desktop frame 620 confines application frame 610, which is represented by an application window 630. Desktop frame 620 is rendered on a virtual desktop server without the graphics content of application window 630. The graphics content of application window 630 is rendered on a virtual application server and captured and encoded as application frame 610. Application frame 610 is communicated to the virtual desktop server. The virtual desktop server does not decode application frame 610 and does not composite application frame 610 with desktop frame 620.

The virtual desktop server transmits application frame 610 and desktop frame 620 to a client for decoding, compositing, and display. Composite frame 640 is a composite of application frame 610 and desktop frame 620. Composite frame 640 includes an application window 650 that includes the graphics content of application frame 610.

While this invention has been described with reference to illustrative embodiments, this description is not intended to be construed in a limiting sense. The scope of the invention is defined by the claims.

## Claims

1. A method of serving a virtual desktop to a client, comprising:
rendering (520) and encoding on a first server an application frame (610), wherein the application frame (610) includes a graphics generated as a product of executing a virtual application and rendering an application window;
rendering (530) and encoding on a second server a desktop frame (620) that confines the application frame (610) but lacks the graphics content of the application frame (610), wherein the desktop frame (620) is a product of executing an OS and rendering a virtual desktop;
communicating (540) the encoded application frame (610) from the first server to the second server; and
communicating (550) the desktop frame (620) and redirecting the encoded application frame (610) from the second server to the client.

2. The method of Claim 1 further comprising receiving and compositing the encoded application frame (610) and the desktop frame (620) at the client.

3. The method of Claim 1 further comprising executing an application on the first server to generate application frame data for the application frame (610).

4. The method of Claim 3 wherein rendering the application frame (610) includes employing a graphics processing subsystem on the first server in processing the application frame data.

5. The method of Claim 1 further comprising employing a central processing unit, CPU, in executing an operating system, OS, within a virtual machine, VM, on the second server, thereby generating desktop frame data for the desktop frame (620).

6. The method of Claim 5 wherein rendering the desktop frame (620) includes employing a graphics processing subsystem on the second server in processing the desktop frame data.

7. The method of Claim 1 wherein the redirecting the application frame (610) includes receiving encoded rendering results and redirecting the encoded rendering results to the client.

8. A virtual desktop server (200), comprising:
a virtual machine monitor (208), VMM, configured to create and run at least one virtual machine (210), VM, for at least one respective client; and
a VM associated with the client according to the VMM and having:
an application frame redirect module (216) configured to receive and redirect an encoded application frame (610, 220) from an application server to the client, wherein the application frame (610, 220) includes a graphics generated as a product of executing a virtual application and rendering an application window, and
an operating system (212), OS, configured to generate a desktop frame (620, 222) for encoding and communicating to the client, wherein the desktop frame (620, 222) is a product of executing an OS and rendering a virtual desktop, and wherein the desktop frame (620, 222) confines the application frame (610, 222), but lacks the graphics content of the application frame (610, 220).

9. The virtual desktop server of Claim 8 further comprising an encoder configured to encode the desktop frame (620).

10. The virtual desktop server of Claim 8 further comprising a central processing unit, CPU, configured to execute the OS for the VM, thereby generating desktop frame data and rendering instructions for the desktop frame (620).

11. The virtual desktop server of Claim 10 further comprising a graphics processing subsystem configured to render the desktop frame (620) according to the desktop frame data and the rendering instructions.

12. The virtual desktop server of Claim 8 wherein the VM also includes a virtual desktop display memory configured to store the desktop frame (620).

13. The virtual desktop server of Claim 12 wherein the application frame redirect module is configured to redirect the encoded application frame (610) to bypass the virtual desktop display memory.

14. A system for serving a virtual desktop to a client, comprising:
a virtual desktop server configured to operate a virtual machine, VM, associated with the client; and
a virtual application server coupled to the virtual desktop server and configured to:
execute an application for the client,
render an application frame (610) for display on the client, wherein the application frame (610) includes a graphics generated as a product of executing a virtual application and rendering an application window, and
encode and communicate the application frame (610) to the VM;
wherein the VM is configured to:
cause the virtual desktop server to render a desktop frame (620) that confines the application frame (610), but lacks the graphics content of the application frame (610), wherein the desktop frame (620) is a product of executing an OS and rendering a virtual desktop,
encode and communicate the desktop frame (620) to the client, and redirect the encoded application frame (610) to the client for compositing with the desktop frame (620).

15. The system of Claim 14 further comprising the client, coupled to the virtual desktop server through a network and operable to:
receive and decode the application frame (610) and the desktop frame (620);
composite the application frame (610) and the desktop frame (620) into a virtual desktop frame; and
display the virtual desktop frame.

16. The system of Claim 14 wherein the virtual application server includes a central processing unit, CPU, configured to execute the application and cause the application frame (610) to be rendered, encoded, and communicated to the VM.

17. The system of Claim 14 wherein the virtual application server includes a graphics processing subsystem configured to render the application frame (610).

18. The system of Claim 14 wherein the virtual application server includes a frame controller configured to determine a frame rate at which application frames (610) are captured on the virtual application server for communicating to the VM.

19. The system of Claim 14 wherein the virtual application server includes a memory space allocated to the VM for storing VM data for use in executing the application.

20. The system of Claim 14 wherein the virtual desktop server includes a central processing unit, CPU, configured to execute an operating system, OS, for the VM, thereby generating desktop data on which the desktop frame (620) is based.

21. The system of Claim 20 wherein the virtual desktop server includes a graphics processing subsystem configured to employ the desktop data to render the desktop frame (620).

22. The system of Claim 14 wherein the virtual desktop server and the virtual application server are coupled by a network connection.

## Patentansprüche

1. Verfahren zum Bereitstellen eines virtuellen Desktops für einen Client, umfassend:
Rendern (520) und Kodieren eines Anwendungsrahmens (610) auf einem ersten Server, wobei der Anwendungsrahmen (610) eine Grafik aufweist, die als Produkt des Ausführens einer virtuellen Anwendung und des Renderns eines Anwendungsfensters erzeugt wurde;
Rendern (530) und Kodieren eines Desktoprahmens (620), der den Anwendungsrahmen (610) begrenzt aber nicht den Grafikinhalt des Anwendungsrahmens (610) aufweist, auf einem zweiten Server, wobei der Desktoprahmen (620) ein Produkt des Ausführens eines OS und eines Renderns eines virtuellen Desktops ist;
Übermitteln (540) des kodierten Anwendungsrahmens (610) vom ersten Server an den zweiten Server; und
Übermitteln (550) des Desktoprahmens (620) und Umleiten des kodierten Anwendungsrahmens (610) vom zweiten Server zum Client.

2. Verfahren nach Anspruch 1, ferner ein Empfangen und ein Zusammensetzen des kodierten Anwendungsrahmens (610) und des Desktoprahmens (620) auf dem Client umfassend.

3. Verfahren nach Anspruch 1, ferner ein Ausführen einer Anwendung auf dem ersten Server umfassend, um Anwendungsrahmendaten für den Anwendungsrahmen (610) zu erzeugen.

4. Verfahren nach Anspruch 3, wobei bei Verarbeiten der Anwendungsrahmendaten das Rendern des Anwendungsrahmens (610) ein Verwenden eines Grafikverarbeitungssubsystems auf dem ersten Server umfasst.

5. Verfahren nach Anspruch 1, ferner ein Verwenden einer Zentralverarbeitungseinheit, CPU, bei Ausführen eines Betriebssystems, OS, innerhalb einer virtuellen Maschine, VM, auf dem zweiten Server umfassend, wodurch Desktoprahmendaten für den Desktoprahmen (620) erzeugt werden.

6. Verfahren nach Anspruch 5, wobei bei Verarbeiten der Desktoprahmendaten das Rendern des Desktoprahmens (620) ein Verwenden eines Grafikverarbeitungssubsystems auf dem zweiten Server umfasst.

7. Verfahren nach Anspruch 1, wobei das Umleiten des Anwendungsrahmens (610) ein Empfangen von kodierten Renderergebnissen und ein Umleiten der kodierten Renderergebnisse an den Client umfasst.

8. Virtueller Desktopserver (200), umfassend:
einen "Virtual-Machine-Monitor" (208), VMM, dafür ausgelegt, wenigstens eine virtuelle Maschine (210), VM, für wenigstens einen jeweiligen Client zu erzeugen und auszuführen; und
eine VM, die dem Client gemäß der VMM zugeordnet ist und die Folgendes aufweist:
ein Anwendungsrahmen-Umleitungsmodul (216), dafür ausgelegt, einen kodierten Anwendungsrahmen (610, 220) von einem Anwendungsserver zu empfangen und zum Client umzuleiten, wobei der Anwendungsrahmen (610, 220) eine Grafik aufweist, die als ein Produkt des Ausführens einer virtuellen Anwendung und des Renderns eines Anwendungsfensters erzeugt wurde, und
ein Betriebssystem (212), OS, dafür ausgelegt, einen Desktoprahmen (620, 222) für das Kodieren und das Übermitteln zum Client zu erzeugen, wobei der Desktoprahmen (620, 222) ein Produkt des Ausführens eines OS und des Renderns eines virtuellen Desktops ist, und wobei der Desktoprahmen (620, 222) den Anwendungsrahmen (610, 222) begrenzt, aber nicht den Grafikinhalt des Anwendungsrahmens (610, 220) aufweist.

9. Virtueller Desktopserver nach Anspruch 8, ferner einen Encoder umfassend, der dafür ausgelegt ist, den Desktoprahmen (620) zu kodieren.

10. Virtueller Desktopserver nach Anspruch 8, ferner eine Zentralverarbeitungseinheit, CPU, umfassend, die dafür ausgelegt ist, das OS für die VM auszuführen, wodurch Desktoprahmendaten und Renderinganweisungen für den Desktoprahmen (620) erzeugt werden.

11. Virtueller Desktopserver nach Anspruch 10, ferner ein Grafikverarbeitungssubsystem umfassend, das dafür ausgelegt ist, den Desktoprahmen (620) entsprechend den Desktoprahmendaten und den Renderinganweisungen zu rendern.

12. Virtueller Desktopserver nach Anspruch 8, wobei die VM auch einen virtuellen Desktopanzeigespeicher aufweist, der dafür ausgelegt ist, den Desktoprahmen (620) zu speichern.

13. Virtueller Desktopserver nach Anspruch 12, wobei das Anwendungsrahmen-Umleitungsmodul dafür ausgelegt ist, den kodierten Anwendungsrahmen (610) umzuleiten, um den virtuellen Desktopanzeigespeicher zu umgehen.

14. System zum Bereitstellen eines virtuellen Desktops für einen Client, Folgendes umfassend:
einen virtuellen Desktopserver, der dafür ausgelegt ist, eine virtuelle Maschine, VM, die dem Client zugeordnet ist, auszuführen; und
einen virtuellen Anwendungsserver, der mit dem virtuellen Desktopserver gekoppelt und für Folgendes ausgelegt ist:
eine Anwendung für den Client auszuführen,
einen Anwendungsrahmen (610) für eine Anzeige auf dem Client zu rendern, wobei der Anwendungsrahmen (610) eine Grafik aufweist, die als Produkt des Ausführens einer virtuellen Anwendung und des Renderns eines Anwendungsfensters erzeugt wurde, und
den Anwendungsrahmen (610) zu kodieren und an die VM zu übermitteln;
wobei die VM für Folgendes ausgelegt ist:
den virtuellen Desktopserver zu veranlassen, einen Desktoprahmen (620) zu rendern, der den Anwendungsrahmen (610) begrenzt, aber nicht den Grafikinhalt des Anwendungsrahmens (610) aufweist, wobei der Desktoprahmen (620) ein Produkt des Ausführens eines OS und des Renderns eines virtuellen Desktops ist,
den Desktoprahmen (620) zu kodieren und an den Client zu übermitteln, und den kodierten Anwendungsrahmen (610) für das Zusammensetzen mit dem Desktoprahmen (620) an den Client umzuleiten.

15. System nach Anspruch 14, ferner den Client umfassend, der über ein Netzwerk mit dem virtuellen Desktopserver verbunden und bedienbar ist, um:
den Anwendungsrahmen (610) und den Desktoprahmen (620) zu empfangen und zu dekodieren;
den Anwendungsrahmen (610) und den Desktoprahmen (620) zu einem virtuellen Desktoprahmen zusammenzusetzen; und
den virtuellen Desktoprahmen anzuzeigen.

16. System nach Anspruch 14, wobei der virtuelle Anwendungsserver eine Zentralverarbeitungseinheit, CPU, aufweist, die dafür ausgelegt ist, die Anwendung auszuführen und zu bewirken, dass der Anwendungsrahmen (610) gerendert, kodiert und an die VM übermittelt wird.

17. System nach Anspruch 14, wobei der virtuelle Anwendungsserver ein Grafikverarbeitungssubsystem aufweist, das dafür ausgelegt ist, den Anwendungsrahmen (610) zu rendern.

18. System nach Anspruch 14, wobei der virtuelle Anwendungsserver einen Rahmen-Controller aufweist, der dafür ausgelegt ist, eine Rahmenrate festzulegen, mit der Anwendungsrahmen (610) auf dem virtuellen Anwendungsserver für eine Übermittlung zur VM erfasst werden.

19. System nach Anspruch 14, wobei der virtuelle Anwendungsserver einen Speicherplatz zum Speichern von VM-Daten aufweist, der der VM zur Verwendung beim Ausführen der Anwendung zugewiesen ist.

20. System nach Anspruch 14, wobei der virtuelle Desktopserver eine Zentralverarbeitungseinheit, CPU, aufweist, die dafür ausgelegt ist, ein Betriebssystem, OS, für die VM auszuführen, wodurch Desktopdaten erzeugt werden, auf denen der Desktoprahmen (620) basiert.

21. System nach Anspruch 20, wobei der virtuelle Desktopserver ein Grafikverarbeitungssubsystem aufweist, das dafür ausgelegt ist, die Desktopdaten zu verwenden, um den Desktoprahmen (620) zu rendern.

22. System nach Anspruch 14, wobei der virtuelle Desktopserver und der virtuelle Anwendungsserver über eine Netzwerkverbindung gekoppelt sind.

## Revendications

1. Procédé de service d'un bureau virtuel à un client, comprenant :
la représentation (520) et le codage sur un premier serveur d'une trame d'application (610), dans lequel la trame d'application (610) comprend des graphiques générés en tant que produit d'exécution d'une application virtuelle et de représentation d'une fenêtre d'application ;
la représentation (530) et le codage sur un second serveur d'une trame de bureau (620) qui confine la trame d'application (610) mais ne comprend pas le contenu graphique de la trame d'application (610),
dans lequel la trame de bureau (620) est un produit d'exécution d'un système d'exploitation et de représentation d'un bureau virtuel ;
la communication (540) de la trame d'application codée (610) du premier serveur au second serveur ; et
la communication (550) de la trame de bureau (620) et la redirection de la trame d'application codée (610) du second serveur au client.

2. Procédé selon la revendication 1, comprenant en outre la réception et la composition de la trame d'application codée (610) et de la trame de bureau (620) sur le client.

3. Procédé selon la revendication 1, comprenant en outre l'exécution d'une application sur le premier serveur afin de générer des données de trame d'application pour la trame d'application (610).

4. Procédé selon la revendication 3, dans lequel la représentation de la trame d'application (610) comprend l'utilisation d'un sous-système de traitement graphique sur le premier serveur dans le traitement des données de la trame d'application.

5. Procédé selon la revendication 1, comprenant en outre l'utilisation d'une unité centrale de traitement, CPU, pour exécuter un système d'exploitation, OS, au sein d'une machine virtuelle, VM, sur le second serveur, générant ainsi des données de trame de bureau pour la trame de bureau (620).

6. Procédé selon la revendication 5, dans lequel la représentation de la trame de bureau (620) comprend l'utilisation d'un sous-système de traitement graphique sur le second serveur lors du traitement des données de trame de bureau.

7. Procédé selon la revendication 1, dans lequel la redirection de la trame d'application (610) comprend la réception de résultats de représentation codés et la redirection des résultats de représentation codés vers le client.

8. Serveur de bureau virtuel (200), comprenant :
un moniteur de machine virtuelle (208), VMM, configuré pour créer et exécuter au moins une machine virtuelle (210), VM, pour au moins un client respectif ; et
une VM associée au client selon le VMM et comportant : un module de redirection de la trame d'application (216) configuré pour recevoir et rediriger une trame d'application codée (610, 220) d'un serveur d'application vers le client, dans lequel la trame d'application (610, 220) comprend des graphiques générés en tant que produit d'exécution d'une application virtuelle et de représentation d'une fenêtre d'application ; et
un système d'exploitation (212), OS, configuré pour générer une trame de bureau (620, 222) pour coder et communiquer au client, dans lequel la trame de bureau (620, 222) est un produit d'exécution d'un système d'exploitation et de représentation d'un bureau virtuel, et dans lequel la trame de bureau (620, 222) confine la trame d'application (610, 222), mais ne comprend pas le contenu graphique de la trame d'application (610, 220).

9. Serveur de bureau virtuel selon la revendication 8, comprenant en outre un codeur configuré pour coder la trame de bureau (620).

10. Serveur de bureau virtuel selon la revendication 8, comprenant en outre une unité centrale de traitement, CPU, configurée pour exécuter le système d'exploitation pour la machine virtuelle, générant ainsi des données de trame de bureau et des instructions de représentation pour la trame de bureau (620).

11. Serveur de bureau virtuel selon la revendication 10, comprenant en outre un sous-système de traitement graphique configuré pour représenter la trame de bureau (620) en fonction des données de trame de bureau et des instructions de représentation.

12. Serveur de bureau virtuel selon la revendication 8, dans lequel la machine virtuelle comprend également une mémoire d'affichage de bureau virtuel configurée pour stocker la trame de bureau (620).

13. Serveur de bureau virtuel selon la revendication 12, dans lequel le module de redirection de la trame d'application est configuré pour rediriger la trame d'application codée (610) pour contourner la mémoire d'affichage de bureau virtuel.

14. Système de service d'un bureau virtuel à un client, comprenant :
un serveur de bureau virtuel configuré pour faire fonctionner une machine virtuelle, VM, associée au client ; et
un serveur d'application virtuel couplé au serveur de bureau virtuel et configuré pour :
exécuter une application pour le client,
représenter une trame d'application (610) à afficher sur le client, dans lequel la trame d'application (610) comprend des graphiques générés en tant que produit d'exécution d'une application virtuelle et de représentation d'une fenêtre d'application ; et
coder et communiquer la trame d'application (610) à la machine virtuelle ;
dans lequel la machine virtuelle est configurée pour :
contraindre le serveur de bureau virtuel à représenter une trame de bureau (620) qui confine la trame d'application (610), mais ne comprend pas le contenu graphique de la trame d'application (610),
dans lequel la trame de bureau (620) est un produit d'exécution d'un système d'exploitation et de représentation d'un bureau virtuel,
coder et communiquer la trame de bureau (620) au client, et
rediriger la trame d'application codée (610) vers le client pour la composition avec la trame de bureau (620).

15. Système selon la revendication 14, comprenant en outre le client, couplé au serveur de bureau virtuel par l'intermédiaire d'un réseau et pouvant fonctionner pour :
recevoir et décoder la trame d'application (610) et la trame de bureau (620) ;
composer la trame d'application (610) et la trame de bureau (620) dans une trame de bureau virtuel ; et
afficher la trame de bureau virtuel.

16. Système selon la revendication 14, dans lequel le serveur d'application virtuel comprend une unité centrale de traitement, CPU, configurée pour exécuter l'application contraindre la représentation, le codage et la communication à la machine virtuelle de la trame d'application (610).

17. Système selon la revendication 14, dans lequel le serveur d'application virtuel comprend un sous-système de traitement graphique configuré pour représenter la trame d'application (610).

18. Système selon la revendication 14, dans lequel le serveur d'application virtuel comprend un dispositif de contrôle de trame configuré pour déterminer une fréquence d'images à laquelle les trames d'application (610) sont capturées sur le serveur d'application virtuel pour communiquer à la machine virtuelle.

19. Système selon la revendication 14, dans lequel le serveur d'applications virtuel comprend un espace mémoire alloué à la machine virtuelle pour stocker des données de machine virtuelle à utiliser pour exécuter l'application.

20. Système selon la revendication 14, dans lequel le serveur de bureau virtuel comprend une unité centrale de traitement, CPU, configurée pour exécuter un système d'exploitation, OS, pour la machine virtuelle, générant ainsi des données de bureau sur lesquelles la trame de bureau (620) est basée.

21. Système selon la revendication 20, dans lequel le serveur de bureau virtuel comprend un sous-système de traitement graphique configuré pour utiliser les données de bureau pour représenter la trame de bureau (620).

22. Système selon la revendication 14, dans lequel le serveur de bureau virtuel et le serveur d'application virtuel sont couplés par une connexion réseau.
